# FASCICULE DE BREVET EUROPEEN

(11) **EP 0 938 376 B1**
(45) Date de publication et mention de la délivrance du brevet: **28.02.2001**
(21) Numéro de dépôt: 97940195.7
(22) Date de dépôt: 09.09.1997
(51) Int. Cl.: B01J 20/12, B01J 39/02

(54) **MATERIAU ADSORBANT SELECTIF VIS-A-VIS DE POLLUANTS METALLIQUES ET SON UTILISATION**
SORBENTMATERIAL SELEKTIV GEGENÜBER METALLISCHEN VERUNREINIGUNGEN UND DESSEN ANWENDUNGSVERFAHREN
ADSORBENT MATERIAL SELECTIVE WITH RESPECT TO METAL POLLUTANTS AND USE THEREOF

(30) Priorité: 11.09.1996 FR 9611242
(43) Date de publication de la demande: 01.09.1999
(73) Titulaire: CENTRE NATIONAL DE LA RECHERCHE SCIENTIFIQUE (CNRS), 75016 Paris (FR)
(72) Inventeur: FLAMAND, Raymond, F-66760 Bourg Madame (FR); GAUTHIER, Daniel, F-66120 Font-Romeu (FR); FLAMANT, Gilles, F-66800 Llo (FR)
(74) Mandataire: Cabinet BARRE LAFORGUE & associés
(86) Numéro de dépôt international: FR9701580
(87) Numéro de publication internationale: WO9810860

(56) Documents cités:
- FR-A- 2 359 076
- US-A- 4 440 867
- DATABASE WPI Week 9508 Derwent Publications Ltd., London, GB; AN 95-056967 XP002031267 & JP 06 335 604 A (HOTTA) , 6 décembre 1994
- PATENT ABSTRACTS OF JAPAN vol. 8, no. 273 (C-256) & JP 59 145087 A (SAGA SHIYOUKOU), 20 août 1984,
- PATENT ABSTRACTS OF JAPAN vol. 9, no. 218 (C-301) & JP 60 082134 A (KUSABA), 10 mai 1985,

## Description

L'invention vise un procédé d'épuration d'un fluide renfermant des ions métalliques par contact dudit fluide avec un matériau adsorbant ces ions métalliques. Elle s'étend à un matériau adsorbant pour la mise en oeuvre d'un tel procédé d'épuration.

Afin de préserver notre environnement, les réglementations européennes concernant les rejets industriels deviennent de plus en plus strictes. Parmi les rejets industriels de notre société de consommation, ceux chargés en polluants métalliques peuvent être la source de pollutions importantes. Les dangers sur la faune et la flore via la chaîne alimentaire humaine sont difficilement maîtrisés dès que la pollution s'est propagée par dilution dans la nappe phréatique. La lutte la plus efficace doit s'instaurer sur le traitement initial du rejet.

Parmi les techniques de traitement de rejets chargés en polluants métalliques, la méthode de rétention par échange de cations entre le rejet et un adsorbeur apparaît intéressante par sa simplicité et son coût de mise en oeuvre. Cette technique utilise la capacité d'échange des zéolites et une affinité remarquable de ces zéolites pour les métaux a été mise en évidence par différents travaux.

Tous ces travaux ont abouti à la conclusion que les zéolites naturelles ou synthétiques présentent des propriétés physico-chimiques conduisant à les considérer comme un matériau unique possédant des capacités d'adsorption inégalables.

Il convient de citer notamment, à cet effet :
- la publication "Les zéolites naturelles" de M. ROCHER dans le "Géochronique" n° 34 - 1990, pages 13 - 17 qui énonce que les zéolites, du fait de leur grande surface interne, sont des matériaux naturels uniques pour l'adsorption des ions et des molécules étrangères ; dans cet article, M. ROCHER mentionne également, concernant les échanges cationiques, que les zéolites sont les matériaux naturels les plus performants,
- la publication "Zéolites and Molecular Sieves : not just ordinary catalysts" de M. DAVIS, dans "Ind. Eng. Chem. Res." 1991, 30, 1675 - 1683, qui énonce que les zéolites constituent un matériau unique car leurs pores sont d'une taille uniforme, et d'un ordre de grandeur similaire à celle de petites particules,
- l'extrait du PASCAL, Tome VIII "Traité de chimie générale" qui énonce, page 238, que bien que les zéolites, de par leur composition chimique et leur structure, se rapprochent des feldspaths, et plus encore des feldspathoïdes qui sont aussi des tectosilicates, la charpente des feldspaths est plus compacte, et l'échange des cations ne peut intervenir, avec ces feldspaths, que dans des conditions hydrothermales et à des températures relativement élevées.

Il ressort donc de l'ensemble de ces publications qu'il existe, à l'heure actuelle, un préjugé basé sur de nombreuses expérimentations, établissant qu'aucun minerai naturel ne saurait présenter des qualités d'adsorption comparables à celles des zéolites.

A l'encontre de ce préjugé, l'invention a consisté à concevoir un procédé d'épuration utilisant un matériau adsorbant sélectif vis-à-vis de polluants métalliques, constitué d'un tectosilicate d'origine naturelle de très faible coût et s'avérant posséder une capacité globale d'échange supérieure à celle des zéolites.

Selon l'invention, ce procédé d'épuration se caractérise en ce que l'on utilise un matériau adsorbant constitué de particules de granulométrie prédéterminée inférieure à 3 mm, d'un minerai de feldspath d'origine naturelle :
- dont la composition minéralogique exprimée en pourcentages massiques, est la suivante :
   . albite > 50 %
   . anorthite ≥ 6 %
   . orthose > 10 %
   . Quartz : < 20 %
- possédant un pourcentage de Na₂O ≥ 6%

L'invention a donc consisté à sélectionner, dans la famille très large des tectosilicates, un feldspath spécifique d'origine naturelle, c'est-à-dire hétérogène et donc a priori peu performant, qui s'avère, selon les expérimentations effectuées par les inventeurs, posséder de façon très surprenante une capacité d'échange globale supérieure à celle des zéolites telles que la clinoptilotite, la chabazite et la phillipsite.

Or, de telles zéolites sont citées par M. ROCHER dans la publication précitée, comme présentant des caractéristiques physico-chimiques telles qu'elles font partie du nombre restreint d'espèces zéolitiques naturelles présentant un intérêt économique.

Cette invention a ainsi consisté, à l'encontre d'un préjugé dûment établi, à utiliser un feldspath spécifique d'origine naturelle en vue de la réalisation d'un matériau adsorbant sélectif vis-à-vis de polluants métalliques.

(Il convient de noter que par polluants métalliques, on entend viser dans la présente demande les polluants suivants : arsenic, zinc, cadmium, nickel, plomb, chrome, or, uranium, cuivre, argent, manganèse, fer, cobalt, brome, indium, étain, antimoine, caesium, mercure, plutonium).

Le feldspath ainsi sélectionné s'avère, en effet et en fait, posséder une excellente capacité d'échange liée à la fois aux sites Na⁺, K⁺, Ca⁺⁺ très actifs, et au nombre d'atomes Al contenus par gramme de solide qui fixe la capacité d'échange globale du matériau adsorbant.

Selon une autre caractéristique de l'invention, le matériau adsorbant est composé de particules comprenant une proportion de quartz, exprimée en pourcentage massique, inférieure à 5 %.

Un tel matériau, obtenu par une séparation sélective des quartz et des micas, possède, en effet, pour certaines applications, un rendement de rétention amélioré car ces particules ne participent pas à l'adsorption.

Il est à noter que selon ce mode de réalisation, le feldspath d'origine naturelle consiste en une structure minérale nouvelle, et l'invention s'étend donc à un tel feldspath d'origine naturelle composé de particules de granulométrie prédéterminée inférieure à 3 mm,
- dont la composition minéralogique exprimée en pourcentages massiques, est la suivante :
   . albite > 50 %
   . anorthite ≥ 6 %
   . orthose > 10 %
   . Quartz : < 5 %
- possédant un pourcentage de Na₂O ≥ 6 %,
   ledit feldspath étant obtenu par un procédé consistant :
- à sélectionner un minerai de feldspath d'origine naturelle dont la composition minéralogique exprimée en pourcentages massiques, est la suivante :
   . albite > 50 %
   . anorthite ≥ 6 %
   . orthose > 10 %
   . Quartz : < 20 %
- possédant un pourcentage de Na₂O ≥ 6%
- et à extraire le quartz dudit minerai par un traitement de tri tel que notamment tamisage ou flottation, de façon à obtenir une proportion de quartz, exprimée en pourcentages massiques, inférieure à 5 %.

En outre, selon une autre caractéristique de l'invention, les particules du matériau adsorbant comprennent un pourcentage global de (Na₂O, K₂O et CaO) supérieur à 10 %.

Par ailleurs, ce matériau adsorbant présente des particules de granulométrie adaptée en fonction de l'application envisagée.

Ainsi, lorsque ce matériau adsorbant est destiné à l'épuration de liquides ou de gaz, les particules présentent préférentiellement un diamètre compris entre 0,5 mm et 2 mm.

Dans le cadre de l'épuration de solides, ces particules présentent par contre préférentiellement un diamètre compris entre 10 µm et 500 µm.

Selon une autre caractéristique de l'invention, on fait subir au matériau naturel broyé un traitement thermique à une température comprise entre 300° C et 800° C. Ce traitement thermique est, en outre, préférentiellement réalisé en phase solide, soit en lit fluidisé, soit en lit brassé.

Un tel traitement thermique qui n'altère pas la composition initiale, permet, en premier lieu, de conduire à une expansion de la structure cristalline augmentant à la fois les porosités de surface et les microcanaux nanométriques internes. De plus, il conduit à un changement de la composition d'albite et d'orthose à l'intérieur du matériau qui modifie la proportion des ions de potassium et de sodium, et par là même la réactivité des sites d'échange.

Dans la pratique, et tel que décrit plus loin, un tel traitement thermique permet pour certaines applications, d'augmenter les capacités d'échange du matériau adsorbant.

Par ailleurs, on procéde avantageusement, après saturation du matériau adsorbant, à la régénération de ce dernier au moyen d'une solution liquide saline.

Le fait de faire circuler une solution saline au travers de l'adsorbant permet, en effet, de remplacer les métaux fixés par des ions tels que Na⁺, K⁺, Ca⁺⁺ et d'obtenir un adsorbant régénéré présentant une structure proche de sa structure initiale. De plus, les métaux libérés peuvent être recyclés après concentration.

Selon un autre mode de mise en oeuvre préférentiel, le matériau adsorbant est vitrifié, après saturation de ce dernier, de façon à inerter les métaux fixés et à les orienter vers un stockage définitif.

Les principales applications du procédé d'épuration selon l'invention sont les suivantes :
- traitements en ligne ou en bassins de rétention d'effluents issus :
   . d'industries chimiques et électroniques,
   . d'industries du traitement de surfaces,
   . d'industries minières (plomb, or, uranium, cuivre, argent, etc...),
   . d'industries des métaux fissibles,
   . de fonderies.
- Réhabilitation :
   . de lacs, nappes phréatiques polluées,
   . de sols pollués (sites industriels, décharges).
- Barrières de protection autour :
   . des décharges,
   . des bassins de décantation.
- Epurations des fumées en sortie d'incinérateurs/chaudières.
- Fixation in situ des métaux toxiques dans les foyers d'incinérateurs d'ordures ménagères ou de déchets industriels ou hospitaliers.

L'intérêt de l'invention ressort des résultats des expérimentations décrites ci-dessous réalisées au moyen de deux types de feldspaths, désignés feldspaths A et B, présentant des compositions minéralogiques et analyses chimiques suivantes. :

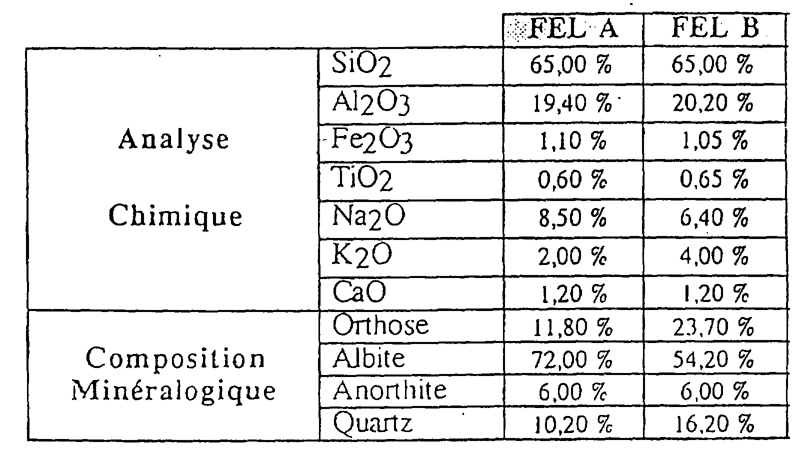

En premier lieu, des tests effectués au porosimètre à mercure ont fait apparaître que ces feldspaths initialement chauffés en lit fluidisé à une température de 800° C pendant six heures, présentaient respectivement une capacité globale d'échange (en meq/g) de 4 pour le feldspath A et de 3,9 pour le feldspath B.

A titre de comparaison, les capacités globales d'échange des zéolites principalement utilisées à l'heure actuelle sont les suivantes :
. clinoptilolite : 2,16
. chabazite : 3,84
. phillipsite : 3,31

Les expérimentations décrites ci-dessous ont été effectuées sur trois types d'effluents et ont consisté pour chacun de ces effluents à effectuer :
- un test en discontinu permettant de simuler une solution de traitement industriel statique (bassin de rétention, fosse d'épuration...), et consistant à mettre en contact dans un récipient un volume de solution à filtrer avec un équivalent-poids de feldspath. De plus, en vue d'obtenir un bon contact solide/liquide, ce dernier est amené à circuler en boucle fermée et avec un débit constant au moyen d'une pompe péristatique.
- un test en continu permettant de simuler un procédé de filtration en continu d'un effluent, consistant à faire circuler l'effluent dans une colonne contenant un lit fixe de feldspath, au moyen d'une pompe péristatique, et à prélever, en sortie de colonne, des échantillons de la solution filtrée de façon à suivre l'évolution de la concentration du rejet en fonction du temps. Ce test permet de déterminer la limite de saturation du lit et de fixer le meilleur instant de régénération du matériau adsorbant pour renouveler son activité.
- un test en colonne sur lits étagés consistant, conformément à la majorité des procédés industriels de filtration, à utiliser une succession de colonnes disposées en cascade afin d'atteindre rapidement la norme de rejet et facilitant la régénération des colonnes selon un cycle intermittent.

### Premier effluent.

Cet effluent consiste en une solution type préparée en laboratoire et contenant six ions de métaux lourds (As, Zn, Cd, Ni, Pb, Cr) dosés chacun à 10 ppm.

### - Test en discontinu

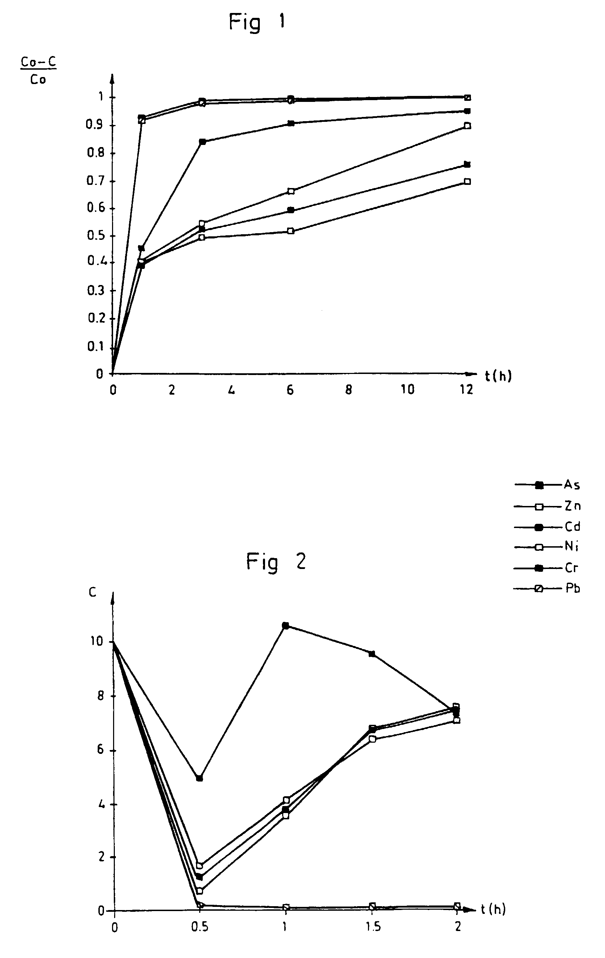

Un premier essai a consisté à étudier la rapidité d'adsorption des cations, et les résultats obtenus sur une période de 12 heures avec du feldspath A non traité thermiquement sont illustrés par la figure 1 qui représente les courbes d'évolution des métaux fixés en fonction du temps.

Il ressort de ces essais que le chrome et le plomb sont adsorbés plus rapidement que les autres métaux (adsorption totale au bout de trois heures). L'arsenic est, quant à lui, adsorbé totalement au bout de six heures, tandis que le temps de douze heures n'est pas suffisant pour adsorber les autres métaux. Toutefois, il est évident qu'il existe une importante compétition entre les différents cations et que la cinétique serait meilleure avec des solutions mono-métalliques.

D'autres essais portant sur une période de contact de douze heures et dont les résultats sont consignés dans le tableau ci-dessous, ont consisté à comparer les performances des deux feldspaths A et B, soit dans leur forme naturelle, soit chauffés au préalable à 300° C 500° C ou à 800° C, en lit fixé ou en lit fluidisé.

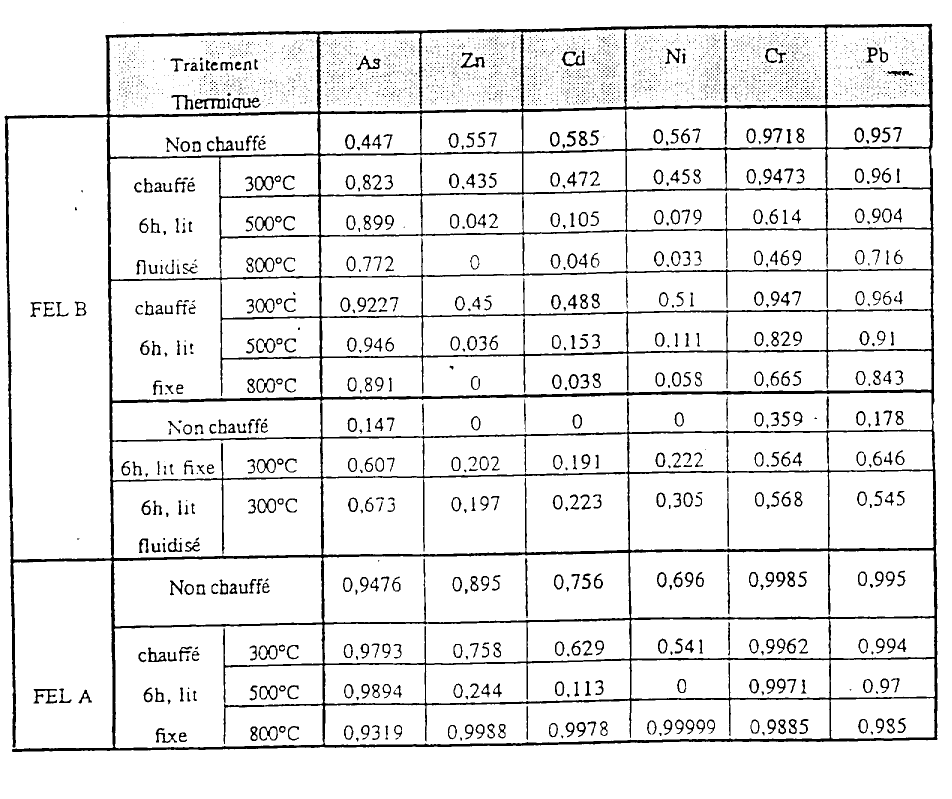

On constate dans ce tableau que sauf pour l'arsenic, le feldspath B est plus efficace lorsqu'il n'a pas subi de traitement thermique préalable. Concernant l'arsenic, le traitement thermique à 500° C donne le meilleur résultat.

Concernant le feldspath A, on constate qu'il présente pour la majorité des métaux une meilleure efficacité lorsqu'il a subi un traitement thermique à 800°C.

### - Test en continu

Les résultats de ces essais réalisés avec du feldspath A non chauffé sont représentés à la figure 2 qui montre que, mis à part l'arsenic, on obtient une rétention quasi totale des ions au bout de trente minutes de filtration, et que la saturation du matériau adsorbant intervient au bout de deux heures.

### Deuxième effluent.

Cet effluent consiste en un effluent industriel contenant 344 mg/l de cadmium et les essais ont été réalisés avec du feldspath A.

### - Test en discontinu

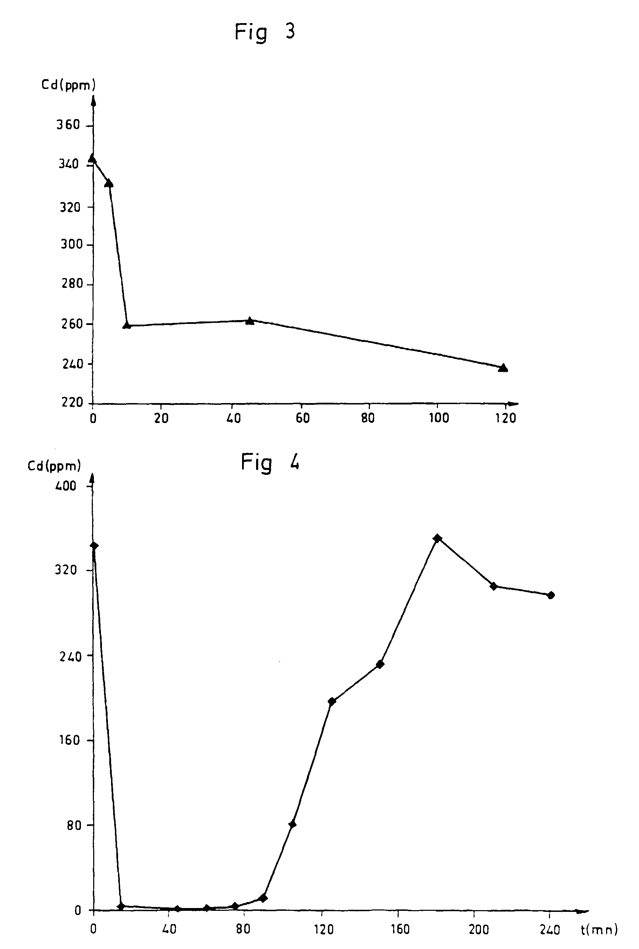

Les résultats de l'essai sont représentés à la figure 3 qui montre que la concentration en cadmium chute rapidement pendant les premières quinze minutes (de 344 ppm à 260 ppm) puis plus lentement jusqu'à la fin du test (deux heures).

### - Test en continu

Cet essai a été réalisé avec du feldspath traité à 800° C pendant 6 heures en lit fluidisé, et les résultats sont représentés à la figure 4. On constate que la rétention du cadmium est quasi-totale après 15 minutes de filtration et que la saturation du matériau n'intervient qu'après une longue période qui, dans la pratique, permet de filtrer un volume de liquide double par rapport au volume de matériau utilisé.

### - Test sur lits étagés

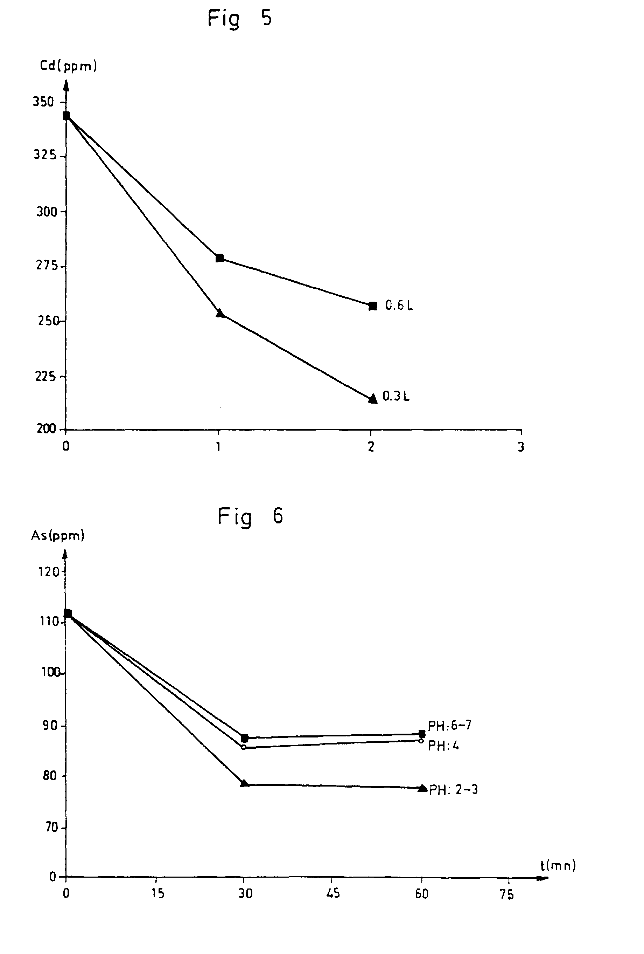

Les résultats de cet essai sont représentés à la figure 5 qui montre l'influence du nombre d'étages de filtration et du volume du liquide filtré (0,3 l ou 0,6 l), sur l'efficacité de l'adsorption.

On constate que la concentration moyenne de la solution diminue dans chaque colonne, cette diminution étant évidemment plus rapide lorsque le volume de liquide traité est plus faible.

En outre, la baisse de la teneur en cadmium est moins importante pour le deuxième étage de filtration.

### Troisième effluent.

Cet effluent consiste en un effluent industriel contenant 112 ppm d'arsenic et les essais ont été réalisés avec du feldspath A.

### - Test en discontinu

Ces essais, dont les résultats sont représentés à la figure 6, ont été effectués avec des solutions de pH différents en vue d'étudier l'influence du pH sur la rétention de l'arsenic. Les valeurs de pH indiquées sur cette figure sont celles des solutions initiales avant leur mise en contact avec le feldspath.

On constate que les variations de concentration pour les trois solutions filtrées ont la même allure : diminution importante dans un premier temps (30 minutes), puis saturation du procédé de filtration dans la deuxième partie du test.

En outre, les résultats obtenus montrent qu'un milieu acide favorise la rétention de l'arsenic, le gain moyen étant de l'ordre de 10 % entre la solution de pH 6-7 et celle de pH 2-3.

### - Test en continu

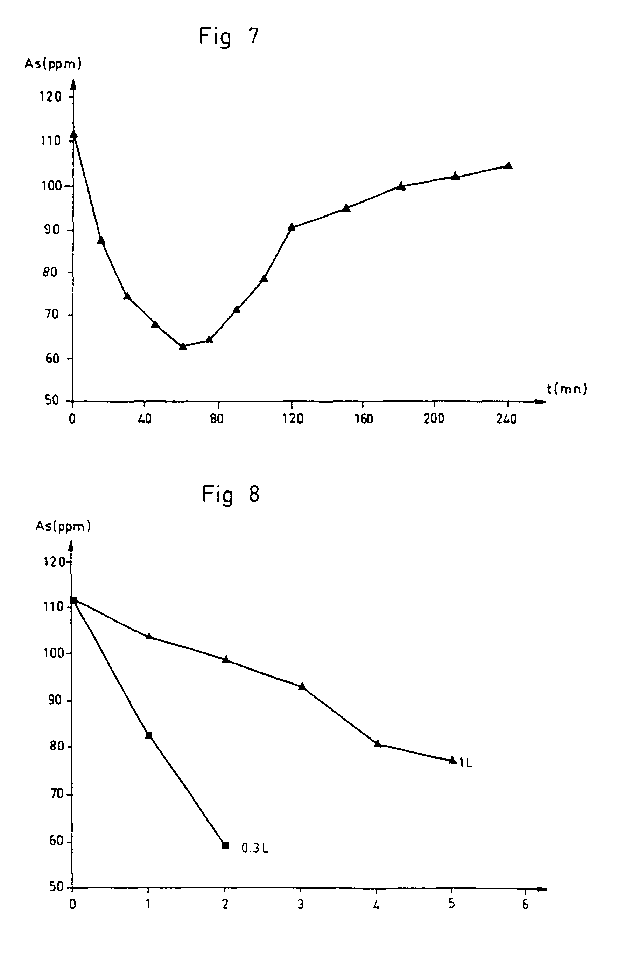

Ces essais, dont les résultats sont représentés à la figure 7, montrent que la teneur en arsenic diminue rapidement pendant la première phase de filtration (1 heure environ), et que la rétention de l'arsenic est plus importante que lors du test en discontinu.

On constate également que pour ces tests en colonne sur lit fixe les rendements après 1 heure de filtration correspondent à environ un volume de liquide équivalent au volume de solide utilisé. Dans la seconde phase du traitement, on observe une remontée de la concentration d'arsenic qui tend vers la valeur initiale de la solution après 4 heures de filtration. Ce résultat fixe le début de saturation du feldspath A après 1 heure environ de filtration et la saturation quasi-complète après 4 heures de traitement.

### - test sur lits étagés

Nous avons reporté sur la figure 8 les résultats des tests en colonne sur lits étagés. Ces tests correspondent respectivement au passage d'un litre de solution sur 5 lits de feldspath et au passage de 0,3 litre de solution sur 2 lits de feldspath.

On observe que la concentration moyenne de la solution diminue après chaque passage dans les colonnes. L'évolution de la concentration d'arsenic diminue de façon quasi linéaire en fonction du nombre de passages. Cette diminution est plus rapide lorsque le volume du liquide traité est faible par rapport à la quantité de matière utilisée. En effet, à débit fixé, la durée de filtration avec un volume important s'avère trop longue pour obtenir un bon rendement car chaque passage diminue la concentration initiale de 7 ppm d'As en moyenne. La deuxième série d'essais utilisant un volume plus faible de solution (0,3 l) permet une filtration efficace de la solution. En effet, dans ce cas, le passage d'une quantité de solution égale à 0,3 litre correspond à un temps de passage qui permet d'appauvrir la solution initiale de 30 ppm d'As à chaque cycle de filtration.

D'après ce résultat, on peut estimer qu'à partir d'une solution initiale chargée à 112 ppm d'arsenic, il est possible d'obtenir une solution dont la concentration serait inférieure à 5 ppm après 4 passages successifs dans une colonne à lits étagés répondant au rapport volume liquide/volume solide voisin de 0,5.

Tous ces essais montrent l'efficacité du matériau adsorbant conforme à l'invention qui peut, grâce à une élaboration adaptée au type de polluant à traiter, présenter un rendement de rétention optimisé. Un tel matériau, élaboré à partir de minerais de feldspath de très faible coût, constitue ainsi un produit très compétitif dans le cadre du traitement de polluants métalliques.

## Revendications

1. Procédé d'épuration d'un fluide renfermant des ions métalliques par contact dudit fluide avec un matériau adsorbant ces ions métalliques, caractérisé en de que l'on utilise un matériau adsorbant constitué de particules de granulométrie prédéterminée inférieure à 3 mm, d'un minerai de feldspath d'origine naturelle :
- dont la composition minéralogique exprimée en pourcentages massiques, est la suivante :
. albite > 50 %
. anorthite ≥ 6 %
. orthose > 10 %
. quartz < 20 %
- possédant un pourcentage de Na₂O ≥ 6 %.

2. Procédé selon la revendication 1 destiné à l'épuration de gaz ou liquides, caractérisé en ce que l'on utilise un matériau adsorbant composé de particules d'un diamètre compris entre 0,5 mm et 2 mm.

3. Procédé selon la revendication 1, caractérisé en ce que l'on utilise un matériau adsorbant composé de particules d'un diamètre compris entre 10µm et 500µm.

4. Procédé selon l'une des revendications 1 à 3, caractérisé en ce que, après saturation du matériau adsorbant, on régénère ce dernier au moyen d'une solution liquide saline.

5. Procédé d'épuration selon des revendications 1 à 3, caractérisé en ce que l'on vitrifie le matériau adsorbant après saturation de ce dernier.

6. Procédé selon l'une des revendications 1 à 5, caractérisé en ce que l'on utilise un minerai de feldspath d'origine naturelle possédant un pourcentage global de (Na₂O, K₂O, et CaO) supérieur à 10 %.

7. Procédé selon l'une des revendications 1 à 6, caractérisé en ce que l'on utilise un minerai de feldspath d'origine naturelle dont la proportion de quartz, exprimée en pourcentage massique, est inférieure à 5 %.

8. Procédé selon l'une des revendications 1 à 7, caractérisé en ce que l'on utilise un matériau adsorbant ayant subi, une fois broyé, un traitement thermique préalable à une température comprise entre 300°C et 800°C.

9. Feldspath d'origine naturelle, caractérisé en ce qu'il est composé de particules de granulométrie prédéterminée inférieure à 3mm,
- dont la composition minéralogique exprimée en pourcentages massiques, est la suivante :
. albite > 50 %
. anorthite ≥ 6 %
. orthose > 10 %
. quartz < 5 %
- possédant un pourcentage de Na₂O ≥ 6 %,
le dit feldspath étant obtenu par un procédé consistant :
- à sélectionner un minerai de feldspath d'origine naturelle dont la composition minéralogique exprimée en pourcentages massiques, est la suivante :
. albite > 50 %
. anorthite ≥ 6 %
. orthose > 10 %
. quartz < 20 %
- possédant un pourcentage de Na₂O ≥ 6 %,
- et à extraire le quartz dudit minerai par un traitement de tri tel que notamment tamisage ou flottation, de façon à obtenir une proportion de quartz, exprimée en pourcentages massiques, inférieure à 5%.

## Claims

1. Process for purifying a fluid containing metallic ions by contacting the said fluid with a material adsorbing these metallic ions, characterized in that an adsorbent material is used consisting of particles having a predetermined particle size less than 3 mm, of a feldspar mineral of natural origin:
- of which the mineralogical composition, expressed in percentages by mass, is as follows:
. albite > 50 %
. anorthite ≥ 6 %
. orthose >10 %
. quartz < 20 %
- possessing an Na₂O percentage ≥ 6 %.

2. Process according to claim 1 intended for purifying gases or liquids, characterized in that an adsorbent material is used composed of particles with a diameter of between 0.5 mm and 2 mm.

3. Process according to claim 1, characterized in that an adsorbent material is used composed of particles with a diameter of between 10 µm and 500 µm.

4. Process according to one of claims 1 to 3, characterized in that, after the adsorbent material is saturated, the latter is regenerated by means of a saline liquid solution.

5. Purification process according claims 1 to 3, characterized in that the adsorbent material is vitrified after the latter is saturated.

6. Process according to one of claims 1 to 5, characterized in that a feldspar mineral of natural origin is used possessing an overall percentage of (NaₐO, K₂O and CaO) greater than 10 %.

7. Process according to one of claims 1 to 6, characterized in that a feldspar mineral of natural origin is used of which the proportion of quartz, expressed as a percentage by mass, is less than 5 %.

8. Process according to one of claims 1 to 7, characterized in that an adsorbent material is used which has been subjected, once it is ground, to a prior heat treatment at a temperature of between 300°C and 800°C.

9. Feldspar of natural origin, characterized in that it is composed of particles with a predetermined particle size less than 3 mm,
- of which the mineralogical composition, expresses in percentages by mass, is as follows;
. albite > 50 %
. anorthite ≥ 6 %
. orthose > 10 %
. quartz < 5 %
- possessing an Na₂O percentage ≥ 6 %,
the said feldspar being obtained by a process consisting of:
- selecting a feldspar mineral of natural origin of which the mineralogical composition, expressed in percentages by mass, is as follows:
. albite > 50 %
. anorthite ≥ 6 %
. orthose > 10 %
. quartz < 20 %
- possessing an Na₂O percentage ≥ 6 %,
- and of extracting quartz from the said mineral by a sorting treatment such as in particular sieving or flotation, so as to obtain a proportion of quartz, expressed in a percentage by mass, of less than 5 %.

## Patentansprüche

1. Verfahren zur Reinigung eines Metallionen enthaltenden Fluids durch Inkontaktbringen des genannten Fluids mit einem Material, das diese Metallionen adsorbiert, dadurch gekennzeichnet, das ein Sorbentmaterial verwendet wird, das aus Partikeln mit einer vorbestimmten Körnchengröße von weniger als 3 mm eines Feldspaterzes natürlichen Ursprungs besteht,
- dessen geologische Zusammensetzung, in Masseprozent ausgedrückt, wie folgt lautet:
. Albit >50%
. Anorthit ≥6%
. Orthoklas >10%
. Quarz <20%
- mit einem Prozentanteil an Na₂O von ≥6%.

2. Verfahren nach Anspruch 1 zur Reinigung von Gas oder Flüssigkeiten, dadurch gekennzeichnet, dass ein Sorbentmaterial verwendet wird, das aus Partikeln mit einem Durchmesser zwischen 0,5 mm und 2 mm besteht.

3. Verfahren nach Anspruch 1, dadurch gekennzeichnet, dass ein Sorbentmaterial verwendet wird, das aus Partikeln mit einem Durchmesser zwischen 10 µm und 500 µm besteht.

4. Verfahren nach einem der Ansprüche 1 bis 3, dadurch gekennzeichnet, dass das Sorbentmaterial nach der Sättigung mit einer Flüssigsalzlösung regeneriert wird.

5. Verfahren nach einem der Ansprüche 1 bis 3, dadurch gekennzeichnet, dass das Sorbentmaterial nach der Sättigung vitrifiziert wird.

6. Verfahren nach einem der Ansprüche 1 bis 5, dadurch gekennzeichnet, dass ein Feldspaterz natürlichen Ursprungs verwendet wird, das einen Gesamtprozentanteil (Na₂O, K₂O und CaO) von mehr als 10% besitzt.

7. Verfahren nach einem der Ansprüche 1 bis 6, dadurch gekennzeichnet, dass ein Feldspaterz natürlichen Ursprungs verwendet wird, dessen Quarzanteil, in Masseprozent ausgedrückt, weniger als 5% beträgt.

8. Verfahren nach einem der Ansprüche 1 bis 7, dadurch gekennzeichnet, dass ein Sorbentmaterial verwendet wird, das nach dem Zermahlen einer Wärmevorbehandlung bei einer Temperatur zwischen 300 und 800°C unterzogen wird.

9. Feldspat natürlichen Ursprungs, dadurch gekennzeichnet, dass er aus Partikeln mit einer vorbestimmten Körnchengröße von weniger als 3 mm besteht,
- dessen geologische Zusammensetzung, ausgedrückt in Masseprozent, wie folgt lautet:
. Albit >50%
. Anorthit ≥6%
. Orthoklas >10%
. Quarz < 5%
- mit einem Prozentanteil an Na₂O von ≥6%,
wobei der genannte Feldspat mit einem Verfahren erhalten wurde, das die folgenden Schritte umfasst:
- Wählen eines Feldspaterzes natürlichen Ursprungs, dessen geologische Zusammensetzung, ausgedrückt in Masseprozent, wie folgt lautet:
. Albit >50%
. Anorthit ≥6%
. Orthoklas >10%
. Quarz <20%
- mit einem Prozentanteil an Na₂O von ≥6%,
- und Extrahieren des Quarzes des genannten Erzes durch Sortieren wie insbesondere Sieben oder Flotation, um einen Quarzanteil, ausgedrückt in Masseprozent, von weniger als 5% zu erhalten.
